Europäisches Patentamt

European Patent Office

Office européen des brevets

(11) Numéro de publication: **0 437 991 A1**

## DEMANDE DE BREVET EUROPEEN

(21) Numéro de dépôt: 90403463.4

(22) Date de dépôt: 06.12.90

(51) Int. Cl.5: **E05F 7/04**

(30) Priorité: 18.01.90 FR 9000560

(43) Date de publication de la demande:
24.07.91 Bulletin 91/30

(84) Etats contractants désignés:
DE GB IT

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Bondu, Jacques**
**12, Rue Jean Macé**
**F-91430 Igny(FR)**

(74) Mandataire: **Robert, Jean-François**
**PEUGEOT S.A., Centre Technique CITROEN,**
**Propriété Industrielle, Route de Gisy**
**F-78140 Velizy(FR)**

(54) **Dispositif de calage de porte.**

(57) Ce dispositif comporte, de manière connue, un élément fixe (5) monté sur le volet et venant en appui, lorsque le volet est fermé, sur un autre élément (6) monté sur la caisse du véhicule. Selon l'inventions ce deuxième élément (6) comprend une surface fixe (11) et une partie (12) mobile en rotation autour d'un axe (14) perpendiculaire à la direction (Y'Y) de mouvement du volet. Le dispositif ne risque pas de se coincer car la surface (11) est petite par rapport à celle de l'élément fixe (5) et un éventuel frottement de celui-ci sur la partie mobile (12) entraînera une rotation de cette dernière.

Application à l'industrie automobile.

FIG. 2

## DISPOSITIF DE CALAGE DE PORTE.

L'invention a pour objet un dispositif dé calage de porte utilisable notamment, mais non exclusivement, sur les volets ou hayons de véhicules automobiles.

Dans les véhicules automobiles du type "à deux volumes", le coffre à bagages est fermé par un volet ou hayon lié à la caisse par un jeu de charnières à sa partie supérieure et une serrure à sa partie inférieure. Comme les carrosseries de ce type ont tendance à vriller, on ajoute des cale-portes interposés entre le volet et la caisse du véhicule, autant que possible dans la zone de plus grande déformation en torsion de celle-ci. Cette zone est déterminée par calcul et vérifiée ensuite, soit sur un prototype, soit sur une maquette en matière plastique à échelle réduite (par exemple 3/8ème).

Ces cale-portes ont pour rôle de mieux solidariser le volet avec la caisse pour diminuer la déformation en torsion de cette dernière. et donc d'atténuer les vibrations qui en résultent. Ceci a pour avantage de supprimer les bruits engendrés par ces vibrations ainsi que les trépidations qui, dans certains véhicules, peuvent être ressenties au niveau du plancher arrière. Ces bruits peuvent provenir de plusieurs sources et être dûs, par exemple, au crissement du joint d'étanchéité sur le volet ou au contact du pêne de la serrure sur la gâche.

De plus, la présence de ces cale-portes permet de mieux assurer la fonction d'étanchéité et de s'accommoder des tolérances dimensionnelles de la carrosserie.

Les cale-portes utilisés à ce jour comprennent généralement un élément en matériau plus ou moins élastique fixé au volet qui vient en appui sur une butée fixée à la caisse. Ces éléments doivent être réglés en position au montage du véhicule, ce qui est une opération relativement longue et délicate. De plus, ces dispositifs risquent de se coincer, ce qui peut gêner et même empêcher l'ouverture du volet.

L'invention a pour but de remédier à ces inconvénients en proposant un dispositif de calage de porte, utilisable notamment pour les volets ou hayons de véhicules automobiles, qui supprime pratiquement tout risque de coincement et simplifie les opérations de réglage au montage du véhicule.

Ce dispositif, comprenant un élément monté sur le volet et apte à venir en appui sur un autre élément monté sur la caisse du véhicule lorsque le volet est fermé, se caractérise en ce que l'un des deux éléments est fixe tandis que l'autre comprend:

- une surface fixe sur laquelle l'élément fixe est en appui sur une faible partie de sa surface lorsque le volet est fermé;
- une partie mobile en rotation autour d'un axe perpendiculaire à la direction de mouvement du volet et présentant une surface apte à être en contact avec l'élément fixe lorsque le volet est fermé; et
- des moyens de rappel de la partie mobile vers l'élément fixe lorsque le volet est fermé.

Selon d'autres caractéristiques du dispositif objet de l'invention:

- la surface fixe et ladite surface de la partie mobile sont situées sensiblement dans un même plan faisant un angle faible non nul avec la direction de mouvement du volet;
- ladite surface fixe fait partie d'une platine fixée sur le volet ou la caisse du véhicule et sur laquelle est montée la partie mobile;
- ladite platine présente une butée contre laquelle les moyens de rappel appliquent la partie mobile; et
- la partie mobile présente une partie arrondie apte à venir en contact avec l'élément fixe au cours de la rotation afin de ne pas gêner le mouvement de celui-ci lors de l'ouverture du volet.

L'invention apparaîtra mieux à la lecture de la description qui va suivre, donnée uniquement à titre d'exemple, en référence aux dessins annexés, dans lesquels:

- la Figure 1 est une vue schématique en coupe d'un dispositif conforme à l'invention en position de fermeture du volet;
- la Figure 2 est une vue schématique en perspective montrant les deux éléments qui composent ce dispositif; et
- les Figures 3a et 3b sont des schémas de principe illustrant le dispositif de l'invention respectivement en position de fermeture du volet et lors de l'ouverture de celui-ci.

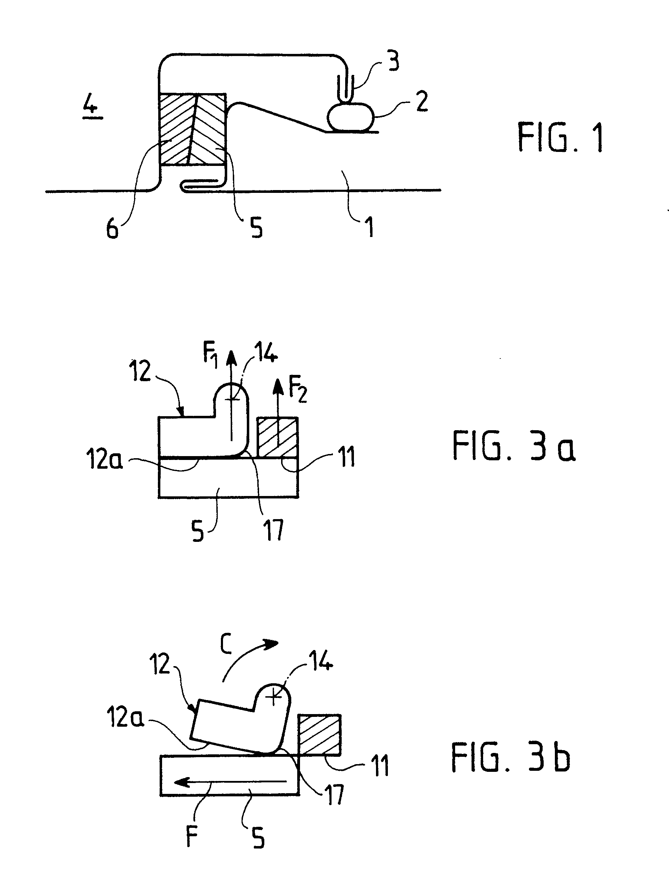

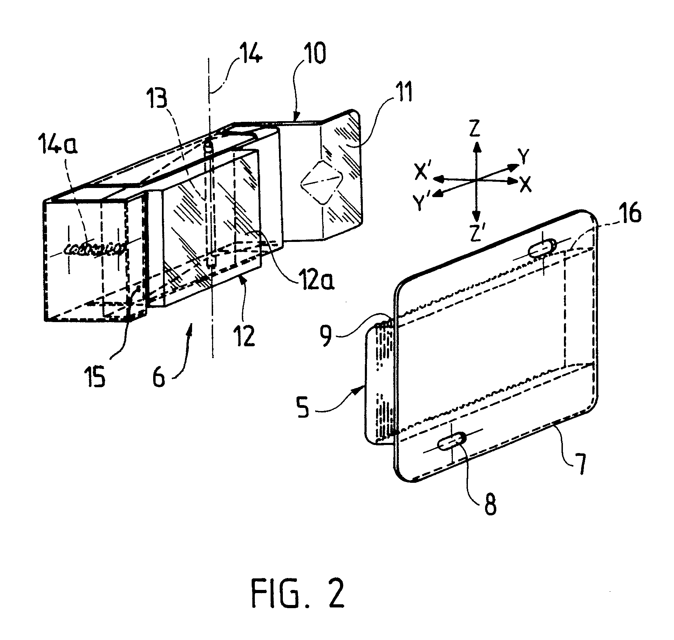

La figure 1 représente de manière très schématique un volet ou hayon de véhicule automobile, portant la référence 1, ce volet étant en position fermée. Il est muni d'un joint d'étanchéité 2 qui vient en appui sur une tôle ou feuillure 3 de la carrosserie 4. Le véhicule est équipé d'un dispositif de calage de porte ou caleporte conforme à l'invention. Celui-ci se compose d'un élément 5 monté sur le volet en appui sur un élément 6 monté sur la carrosserie.

Ces deux éléments apparaissent mieux sur la vue en perspective de la figure 2.

L'élément 5 est fixé sur une platine 7 munie de trous 8 permettant sa fixation sur le volet au moyen de vis et de rondelles. La platine 7 peut être en tôle revêtue et l'élément 5 en caoutchouc adhérisé sur la platine. Les trous 8 sont de forme allongée pour permettre le réglage en position de l'élément 5 au montage du véhicule, comme on le verra plus loin. L'élément 5 présente une surface sensiblement plane 9, qui peut être striée, et qui vient en appui contre l'élément 6 lorsque le volet est fermé.

Dans l'exemple décrit ici. l'élément 6 se compose essentiellement d'une platine 10. fixée sur la caisse du véhicule et présentant à son extrémité antérieure une partie plane 11. Celle-ci constitue la surface fixe précitée sur laquelle la partie antérieure de l'élément 5 vient en appui en position de fermeture du volet.

Sur la platine 10 est également montée une pièce en matière plastique 12 présentant une surface plane 12a. Cette pièce 12 est articulée sur un axe en acier 13, ce qui la rend mobile en rotation autour d'un axe de rotation 14 perpendiculaire à la direction de mouvement du volet.

Lors de l'ouverture et de la fermeture du volet, chaque point de celui-ci décrit un arc de cercle. L'expression "direction de mouvement du volet" utilisée dans la présente description désigne la tangente à cet arc de cercle au niveau de l'élément 6. En effet, au niveau de l'élément 6, l'élément 5 décrit un arc de cercle de très faible longueur assimilable à un segment de droite.

Sur la figure 2, on a désigné par Y'Y la direction correspondante, par X'X la direction perpendiculaire à Y'Y et perpendiculaire au plan de la platine 7, et par Z'Z la direction perpendiculaire à X'X et Y'Y: l'axe de rotation 14 est parallèle à Z'Z.

On voit encore sur la figure 2 un ressort 14a interposé entre la platine 10 et la pièce 12, à une extrémité de celle-ci éloignée de l'axe 14. Ce ressort, qui constitue les moyens de rappel précités a pour but de pousser la pièce 12 contre l'élément 5 lorsque le volet est fermé. Lorsque celui-ci est ouvert. le ressort 14a pousse la pièce 12 contre une butée 15 de la platine 10 située à l'extrémité de cette dernière opposée à la surface 11.

Lorsque le ressort 14a applique la pièce 12 contre la butée 15 les surfaces 11 et 12a se trouvent sensiblement dans un même plan qui contient la direction Z'Z et fait un angle faible non nul avec la direction Y'Y. La face 9 de l'élément 5 est orientée parallèlement à ce plan.

La platine 10 peut être en tôle et soudée sur la carrosserie du véhicule lors du ferrage de la caisse, avant passage en cataphorèse et peinture.

Le cale-porte objet de l'invention fonctionne de la manière suivante:

Lorsqu'on ferme le volet, la surface 9 de l'élément 5 vient en appui sur les surfaces 11 et 12a de l'élément 6 en se déplaçant suivant la direction Y'Y. Le fait que le plan de ces surfaces fasse un angle de quelques degrés avec la direction Y'Y permet d'obtenir un bon calage de l'élément 5 sur l'élément 6. Pour faciliter la pénétration, la partie antérieure 16 de l'élément 5 a son extrémité sensiblement en forme de biseau.

Lorsque le volet est fermé, on se trouve dans la position illustrée à la figure 3a. Le ressort 14a pousse la pièce 12 contre l'élément 5. Celui-ci est en appui sur les surfaces 12a et 11 et exerce sur celles-ci les réactions F1 et F2, F1 passant par l'axe de rotation 14.

Lors de l'ouverture du volet. l'élément 5 se dégage des surfaces 11 et 12a en se déplaçant suivant la flèche F (figure 3b). La constitution du dispositif objet de l'invention évite tout risque de coincement pour les raisons suivantes:

Il sera toujours facile de dégager l'élément 5 de la surface 11 car le contact ne se fait que sur une faible partie de la surface 9. Et s'il y a une résistance au niveau de la surface 12a, l'effort correspondant se transformera en un couple C entraînant la rotation de l'élément 12 dans le sens des aiguilles d'une montre vu sur la figure 3b, et permettant ainsi l'extraction de l'élément 5.

Pour faciliter cette rotation, on a prévu sur l'élément 12 une partie arrondie 17 dans la zone où celui-ci est en contact avec l'élément 5 au cours de la rotation.

Le dispositif objet de l'invention présente des avantages particulièrement intéressants dont 1e principal est d'éviter le blocage des éléments 5 et 6, comme on vient de le voir ci-dessus. De plus, le réglage en position de ce dispositif est beaucoup plus facile qu'avec les dispositifs de l'art antérieur. En effet, seul l'élément 5 a besoin d'être réglé puisque l'élément 6 présente une partie mobile en rotation.

Ce réglage se fait de la manière suivante:

La platine 7 est montée sur le volet, les vis de fixation n'étant pas complètement serrées. On ferme ensuite le volet, l'ensemble élément 5-platine 7 se positionne alors automatiquement par rapport à l'élément 6. Ce mouvement est rendu possible grâce à la forme allongée des trous 8. On ouvre alors le volet et il ne reste plus qu'à serrer les vis de fixation dans la position ainsi obtenue.

Il est bien entendu que l'invention ne se limite pas au seul mode de réalisation qui vient d'être décrit, mais qu'elle en couvre au contraire toutes les variantes. Par exemple, on ne sortirait pas du cadre de l'invention en montant l'élément 6 sur le volet et non pas sur la caisse, ou en modifiant la forme et les dimensions des éléments 5 et 6 et des platines 7 et 10 ou la forme de la partie mobile 12.

**Revendications**

1. Dispositif de calage de porte, notamment pour volet ou hayon de véhicule automobile, comprenant un élément (5) monté sur le volet (1) et apte à venir en appui sur un autre élément (6) monté sur la caisse (4) du véhicule lorsque le volet (1) est fermé, caractérisé en ce que l'un (5) des deux éléments est fixe tandis que l'autre (6) comprend:

- une surface fixe (11) sur laquelle l'élément fixe (5) est en appui sur une faible partie de sa surface lorsque le volet (1) est fermé;
- une partie (12) mobile en rotation autour d'un axe (14) perpendiculaire à la direction (Y'Y) de mouvement du volet (1) et présentant une surface (12a) apte à être en contact avec l'élément fixe (5) lorsque le volet (1) est fermé; et
- des moyens de rappel (14a) de la partie mobile (12) vers l'élément fixe (5) lorsque le volet est fermé.

2. Dispositif selon la revendication 1, caractérisé en ce que la surface (11) et ladite surface (12a) de la partie mobile (12) sont situées sensiblement dans un même plan faisant un angle faible non nul avec la direction (Y'Y) de mouvement du volet.

3. Dispositif selon l'une quelconque des revendications 1 et 2, caractérisé en ce que ladite surface fixe (11) fait partie d'une platine (10) fixée sur le volet ou la caisse du véhicule et sur laquelle est montée la partie mobile (12).

4. Dispositif selon la revendication 3. caractérisé en ce que ladite platine (10) présente une butée (15) contre laquelle les moyens de rappel (14a) appliquent la partie mobile (12).

5. Dispositif selon l'une quelconque des revendications 1 à 4, caractérisé en ce que la partie mobile (12) présente une partie arrondie (17) apte à venir en contact avec l'élément fixe (5) au cours de la rotation afin de ne pas gêner le mouvement de celui-ci lors de l'ouverture du volet (1).

FIG. 1

FIG. 3 a

FIG. 3 b

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-8 789 52   (WILMOT-BREEDEN LTD.)<br>* figures 1-3 *<br>— — — | 1 | E 05<br>F 7/04 |
| A | FR-A-8 019 58   (MITCHELL SPECIALITY COMPANY)<br>* figures 1-6 *<br>— — — | 1 | |
| A | US-A-2 972 164   (F.K.H. NALLINGER)<br>* figures 1,2 *<br>— — — — — | 1 | |

|  | DOMAINES TECHNIQUES RECHERCHES (Int. Cl.5) |
|---|---|
|  | E 05 F<br>E 05 B |

Le présent rapport de recherche a été établi pour toutes les revendications

| Lieu de la recherche | Date d'achèvement de la recherche | Examinateur |
|---|---|---|
| Berlin | 25 janvier 91 | KRABEL A.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant